# EUROPÄISCHE PATENTSCHRIFT

(11) **EP 3 835 531 B1**
(45) Veröffentlichungstag und Bekanntmachung des Hinweises auf die Patenterteilung: **27.03.2024**
(21) Anmeldenummer: 19214435.0
(22) Anmeldetag: 09.12.2019
(51) Int. Cl.: E05F 15/603, H02K 1/278, H02K 15/03, E05F 15/632, E05F 15/643

(54) **TÜRANTRIEB MIT EINER LEISTUNGSSTARKEN, KLEINBAUENDEN MOTOREINHEIT**
DOOR DRIVE WITH A HIGH PERFORMANCE SMALL MOTOR UNIT
ENTRAINEMENT DE PORTE DOTÉ D'UNE UNITÉ MOTEUR D'ENCOMBREMENT RÉDUIT HAUTE PERFORMANCE

(43) Veröffentlichungstag der Anmeldung: 16.06.2021
(73) Patentinhaber: dormakaba Deutschland GmbH, 58256 Ennepetal (DE)
(72) Erfinder: Bertels, Dennis, 58256 Ennepetal (DE); Wagner, Martin, 58256 Ennepetal (DE); Finis, Dietmar, 58256 Ennepetal (DE)
(74) Vertreter: Balder IP Law, S.L.

(56) Entgegenhaltungen:
- DE-A1-102008 047 310
- DE-A1-102014 115 931
- US-A1- 2010 244 607

## Beschreibung

Die Erfindung betrifft einen Türantrieb zur Anordnung an oder in Verbindung mit einer Türanlage, mit dem zumindest ein Flügelelement der Tür-anlage bewegbar ist, aufweisend eine Motoreinheit mit einem Gehäuse, in dem ein Stator ruhend aufgenommen ist und wobei ein Rotor drehbeweglich im Gehäuse angeordnet ist, der eine Abtriebswelle aufweist, wobei die Abtriebswelle mit dem Flügelelement antreibend in Wirkverbindung gebracht werden kann, und wobei der Rotor einen Trägerkörper aufweist, an dem Aufnahmefelder ausgebildet sind, auf denen Permanentmagnete aufgeklebt sind, wobei ferner der Rotor einen Umfangsbereich aufweist, der mit den Aufnahmefeldern eine polygonartige Gestalt bildet und wobei der Rotor eine Rotationsachse aufweist, wobei zwischen den Aufnahmefeldern Trennstege ausgebildet sind, die einen Teil des Umfangsbereiches bilden und sich parallel zur Rotationsachse erstrecken und wobei die Aufnahmefelder zwischen den Trennstegen eine parallel zur Rotationsachse verlaufende längliche Erstreckung aufweisen. Weiterhin betrifft die Erfindung eine Türanlage mit einem solchen Türantrieb, aufweisend wenigstens ein Flügelelement, mit dem der Türantrieb antreibend in Wirkverbindung steht.

Aus der DE 10 2008 046 062 A1 ist ein Türantrieb zur Anordnung an einer Türanlage bekannt, und der Antrieb dient zur Bewegung von Flügelelementen der Türanlage, die als automatische Schiebetür ausgebildet ist. Der Türantrieb weist hierfür eine Motoreinheit mit einem Gehäuse auf, und an das Gehäuse der Motoreinheit ist eine Getriebeeinheit angebracht, die als Schneckenradgetriebe ausgeführt ist. Damit ist die Motoreinheit als schnelldrehender Motor konzipiert, und mit der Getriebeeinheit wird die höhere Drehzahl des Rotors der Motoreinheit reduziert auf eine geringere Drehzahl zum Antrieb einer Riemenscheibe, die auf eine Abtriebswelle der Getriebeeinheit aufgesetzt ist.

Über die Riemenscheibe ist ein Zahnriemen geführt, der mit den Flügelelementen der automatischen Schiebetür verbunden wird. Da die Motoreinheit schnelldrehend ausgelegt ist, und die Drehzahl auf die Riemenscheibe reduziert werden muss, ist in Verbindung mit dem Motor die Getriebeeinheit notwendig, wodurch zusätzlicher Bauraum erforderlich wird, und wodurch die Konstruktion des Türantriebs komplexer wird. Die räumliche Dimensionierung des Türantriebs muss an die Notwendigkeit der Getriebeeinheit angepasst werden, und da der Motor eine zylinderförmige Grundform aufweist, nimmt dieser einen Bauraum ein, der in Bezug auf seine Einbauumgebung keine optimale Raumnutzung ermöglicht. Gleiches gilt für ein Schneckenradgetriebe, das insbesondere in Verbindung mit dem Motor quer verläuft und daher sehr bauraumintensiv ist.

Insbesondere dann, wenn die Abtriebswelle zur direkten Aufnahme einer Riemenscheibe in der eingebauten Türanlage horizontal verlaufen soll, muss die Motorbauform vor allem in Erstreckungsrichtung der Abtriebswelle kurz ausfallen, da es sonst zu Bauraumproblemen beim Einbau der Motoreinheit kommt. Dies liegt darin begründet, dass der mit einem Zahnriemen über die Riemenscheibe angetriebene Läufer im Trägerprofil, der zur Aufnahme eines Flügelelementes beispielsweise einer automatischen Schiebetür dient, noch innerhalb des Trägerprofils an der Riemenscheibe vorbeilaufen können muss. Daher sollte die Motoreinheit in Erstreckungsrichtung der Rotorachse möglichst kurzbauend ausfallen.

Einen weiteren Türantrieb offenbart die DE 10 2014 115 932 A1, und der Türantrieb weist als Grundkörper einen einteiligen quaderförmigen Körper auf, in den Aussparungen zwecks Aufnahme einer Motoreinheit und einer Getriebestufe eingebracht sind. Zur weiteren Aufnahme einer Steuerung, einem Netzteil und dergleichen sind in dem Block weitere Aussparungen und Öffnungen vorgesehen. Der quaderförmige Körper bildet also ein Gehäuse als Träger der einzelnen Komponenten des Türantriebes und ist über der gesamten Abmessung des Antriebes einteilig und gewissermaßen monolithisch ausgeführt. Die Lagerung des Rotors erfolgt mittels einer im quaderförmigen Körper des Türantriebs eingefassten stehenden Achse, wodurch sich aufgrund der einseitig eingefassten Achse ein unvorteilhafter Lastfall ergibt, insbesondere wenn über die Getriebestufe bei großen, schweren Ganzglas-Flügelelementen hohe Kräfte in den Rotor einleitet werden, die über die gegenüberliegend eingefasste, stehende Achse aufgenommen werden müssen.

Grundsätzlich wird bei der Konstruktion von Türantrieben zur Anordnung an oder in Verbindung mit einer Türanlage das Ziel verfolgt, den Türantrieb möglichst kompakt und mit kleinen Abmessungen auszuführen, beispielsweise indem eine Getriebeeinheit oder eine Getriebestufe innerhalb des Türantriebs bereits vermieden wird. Türantriebe werden üblicherweise oberhalb der linear bewegbaren Flügelelemente einer automatischen Schiebetüranlage angeordnet und weisen ein Trägerprofil auf, das einen Grundkörper der Türanlage bildet und im Trägerprofil werden der Türantrieb integriert montiert und gleichermaßen die Flügelelemente linear geführt. Als Verbindungsmittel zwischen dem Türantrieb und den Flügelelementen dient in der Regel ein Zahnriemen, wobei auch andere Zugmittel wie Kettenverbindungen und dergleichen möglich sind. Der Türantrieb bildet dabei mit wenigstens dem Motor, einem Netzteil und einer Steuerung eine eigene Baueinheit, die mit der Anordnung am Trägerprofil in die Türanlage integriert wird.

Um das Trägerprofil mit einer entsprechenden Blende, einem Gehäuse oder sonstigen Umbauteilen möglichst kleinbauend auszuführen, ist es von Vorteil, auch und insbesondere den Türantrieb selbst möglichst kompakt und mit kleinen Abmessungen auszuführen. Da jedoch Flügelelemente aus Glas große Massen erreichen können, muss der Türantrieb eine hohe Leistungsdichte aufweisen, um trotz kleiner Baumaße derartige Flügelelemente entsprechend stark beschleunigen und auch wieder verzögern zu können, damit die Türanlage auch mit großen Flügelelementen noch eine geforderte Dynamik erreicht.

Für eine hohe Leistungsdichte und insbesondere einen geräuscharmen Betrieb bieten sich Motoreinheiten in Verbindung mit einem Zahnriemen als Direktantriebe an, bei denen auf der Abtriebswelle der Motoreinheit unmittelbar die Riemenscheibe aufgebracht wird, über die der Zahnriemen gelegt wird, der wiederum unmittelbar mit den Flügelelementen in Verbindung steht. Dadurch kann der Türantrieb geräuschminimal betrieben werden, da keine hohen Motordrehzahlen erreicht werden, und bei entsprechender Auslegung der Motoreinheit können Leistungsdichten bereitgestellt werden, die hinreichend sind, um Flügelelemente von beispielsweise 200kg bis 250kg für den Betrieb einer automatischen Schiebetür hinreichend stark zu beschleunigen und auch wieder zu verzögern.

Bei einer Motoreinheit mit einem Direktantrieb werden häufig eher niedrige Drehzahlen des Rotors verbunden mit hohen Drehmomenten realisiert, wodurch eine besonders robuste Lagerung des Rotors im Gehäuse der Motoreinheit notwendig wird.

Der Stator weist gemäß einer regelmäßigen Bauform eine Anzahl von Spulen auf, die bei einem Innenläufer auf radial nach innen weisenden Zähnen des Stators aufgebracht sind. Innerhalb der radial nach innen weisenden Zähne ist der Rotor drehbeweglich aufgenommen und dieser umfasst eine Anzahl von Permanentmagneten. Werden die Spulen elektrisch angesteuert und radial umlaufend bestromt, so wird der Rotor mit den Permanentmagneten in Rotation ersetzt. Die Anbindung der Permanentmagnete an einen Trägerkörper des Rotors ist dabei häufig problematisch. In der Regel werden die Permanentmagnete mit Klammerelementen am Trägerkörper festgesetzt oder mit einer Vergussmasse gemeinsam mit dem Trägerkörper vergossen.

Aus der US 2010 244 607 A1 ist ein Rotor eines elektrischen Motors bekannt, der einen polygonförmigen Trägerkörper aufweist. Aufgrund der Polygonform sind auf dem Außenumfang nebeneinander angeordnete Aufnahmefelder ausgebildet, auf denen Permanentmagnete plan aufgeklebt werden. Ein Klebespalt mit einer definiert einbringbaren Klebemittelmenge ist dabei nicht möglich. Insbesondere bei Temperaturänderungen und einem längeren Gebrauch des elektrischen Motors können sich die Permanentmagnete lösen, was es insbesondere zu vermeiden gilt.

Die DE 10 2008 047 310 A1 offenbart einen Rotor eines elektrischen Motors, der aus einem Magnetträger besteht, auf dessen Trägerfläche mehrere schalenförmige Magnetprofile befestigt sind, deren Längsachsen parallel zueinander und parallel zu einer Rotordrehachse angeordnet sind, und deren Magnetaußenseite als Zylindersegment geformt ist und die gemeinsam mit den Magnetaußenseiten aller anderen Magnetprofile zumindest den größten Teil der Rotoraußenfläche bilden, und wobei die den Magnetaußenseiten aller Magnetprofile jeweils gegenüberliegenden Magnetinnenseiten ebenfalls als Zylindersegment mit dem gleichen Radius wie die Magnetaußenseite geformt ist. Ein Klebespalt mit einer definiert einbringbaren Klebemittelmenge ist aus bei dieser Ausführung nicht möglich.

Die DE 10 2014 115 931 A1 offenbart einen Rotor eines elektrischen Motors, der einen Trägerkörper aufweist, an dem Aufnahmefelder ausgebildet sind, auf denen Permanentmagnete aufgeklebt sind, wobei ferner der Rotor einen Umfangsbereich aufweist, der mit den Aufnahmefeldern eine polygonartige Gestalt bildet und wobei der Rotor eine Rotationsachse aufweist, wobei zwischen den Aufnahmefeldern Trennstege ausgebildet sind, die einen Teil des Umfangsbereiches bilden und sich parallel zur Rotationsachse erstrecken und wobei die Aufnahmefelder zwischen den Trennstegen eine parallel zur Rotationsachse verlaufende längliche Erstreckung aufweisen.

Aufgabe der Erfindung ist die Schaffung eines Türantriebs mit einer Motoreinheit, die eine hohe Integrationsdichte und eine hohe Leistungsdichte aufweist, und wobei der Motor in Verbindung mit dem wenigstens einen Flügelelement insbesondere als Direktantrieb ausgeführt sein soll. Trotz der hohen Integrationsdichte des Türantriebes soll eine kompakte Ausführung der Motoreinheit erreicht werden, der insbesondere innerhalb des Gehäuses eine hohe Packungsdichte aufweist.

Diese Aufgabe wird ausgehend von einem Türantrieb gemäß Anspruch 1 und ausgehend von einer Türanlage gemäß Anspruch 11 mit den jeweils kennzeichnenden Merkmalen gelöst. Vorteilhafte Weiterbildungen der Erfindung sind in den abhängigen Ansprüchen und in der Beschreibung angegeben.

Die Erfindung schließt die technische Lehre ein, dass der Rotor einen Trägerkörper aufweist, an dem Aufnahmefelder ausgebildet sind, auf denen Permanentmagnete aufgeklebt sind, und wobei die Aufnahmefelder über ihrer Längskante mit seitlichen an die Trennstege angrenzenden Auflagestreifen ausgebildet sind, wobei die Aufnahmefelder zwischen den Auflagestreifen einen Muldenbereich aufweisen, sodass bei Anordnung der Permanentmagnete auf den Aufnahmefeldern ein definierter Klebespalt zur Aufnahme von Klebemittel ausgebildet wird.

Kerngedanke der Erfindung ist eine einfache Ausgestaltung des Rotors mit der Abtriebswelle, aufweisend einen Trägerkörper mit an diesem angeordnete Permanentmagnete. Um eine einfache Anordnung der Permanentmagnete, insbesondere ohne Zuhilfenahme weiterer Elemente, vorzusehen, schlägt die Erfindung vor, Aufnahmefelder am Außenumfang des Trägerkörpers zu schaffen, auf denen die Permanentmagnete aufgeklebt sind. Durch die Schaffung von Aufnahmefeldern werden die Positionen der Permanentmagnete zueinander in Anordnung am Trägerkörper definiert, und die Aufnahmefelder können vorteilhafterweise so ausgeführt werden, dass die Klebeverbindung zur haltenden Anordnung der Permanentmagnete am Trägerkörper ausreichend sein kann.

Die Aufnahmefelder bilden dabei keine plan ausgeführten Felder, und diese können mit Vorteil wenigstens eine Rechteckform aufweisen, an die die Rechteckform der Permanentmagnete angepasst ist, sodass die Funktion der genauen Positionierung der Permanentmagnete am Trägerkörper hierüber erfüllt wird. Die Rechteckform besitzt eine längere und eine kürzere Kante, wobei die längere Kante parallel verläuft zur Abtriebswelle und damit zur Rotationsachse des Rotors.

Der Trägerkörper mit einer Anzahl von Aufnahmefeldern an seinem Außenumfang und die Permanentmagnete selbst können so dimensioniert werden, dass ein sehr geringer Spalt zwischen der Außenseite der Permanentmagnete und der Innenseite der Zähne des Stators entsteht. Dadurch erhöht sich das Drehmoment der Motoreinheit bei sonst unveränderten Außenmaßen, und durch den Fall einer Vergussmasse kann die Oberfläche der Permanentmagnete in der Dimensionierung sehr nah herangeführt werden an die innere Oberfläche der Zähne des Stators, auf denen die Spulen mit dem Wicklungsdraht aufgebracht sind.

Erfindungsgemäß weist der Rotor einen Umfangsbereich auf, der mit den Aufnahmefeldern eine polygonartige Gestalt bildet. Zwischen den Aufnahmefeldern sind Trennstege ausgebildet, die einen Teil des Umfangsbereiches bilden und sich parallel zu einer Rotationsachse der Abtriebswelle und damit des Rotors erstrecken. Die Trennstege trennen zwei zueinander benachbarte Aufnahmefelder und dienen zugleich zur Ausrichtung und Positionierung der aufgeklebten Permanentmagnete. Insbesondere dienen die Trennstege zur Sicherstellung eines definierten Abstandes zwischen zwei benachbarten Permanentmagneten.

Die Aufnahmefelder weisen zwischen den Trennstegen eine parallel zur Rotationsachse verlaufende längliche Erstreckung auf, und es ist vorgesehen, dass über der Längskante der Aufnahmefelder angrenzend an die Trennstege schmal ausgebildete Auflagestreifen ausgebildet sind. Auf diesen Auflagestreifen werden die Permanentmagnete definiert angelegt, wobei die zum Trägerkörper weisende Seite der Permanentmagnete beispielsweise plan ausgeführt ist. Die radial nach außen weisende, vordere Fläche der Permanentmagnete kann eine Krümmung aufweisen, die mit dem Radius des Rotors übereinstimmt, während die nach innen weisende, hintere Fläche der Permanentmagnete beispielsweise plan ausgeführt ist, dies jedoch nicht sein muss. Damit ergibt sich eine noch weitere Verbesserung des Spaltes zwischen den Permanentmagneten und den nach innen weisenden Endflächen der Zähne des Stators.

Die Aufnahmefelder umfassen zwischen den Auflagestreifen einen Muldenbereich, sodass bei Anordnung der Permanentmagnete auf den Aufnahmefeldern ein in der Breite definierter Klebespalt zur Aufnahme von Klebemitteln ausgebildet ist. Mit besonderem Vorteil sind die Aufnahmefelder demgemäß nicht plan ausgeführt, sondern durch eine leichte Vertiefung in den Aufnahmefeldern entstehen Muldenbereiche, die zur Aufnahme von Klebemitteln dienen, insbesondere wenn die zu den Aufnahmefeldern weisende Seite der Permanentmagnete plan ausgeführt ist. Die Tiefe des Muldenbereiches und damit die Ausgestaltung des Klebespaltes ist an das verwendete Klebemittel angepasst. Insbesondere kann ein Acrylat-Klebstoff und/oder ein anaerober Klebstoff zum Einsatz kommen, beispielsweise ein LOCTITE-3342 (TM).

Es ist weiterhin vorgesehen, dass die Permanentmagnete auf der der Abtriebswelle abgewandten Seite über den Trägerkörper und damit gegebenenfalls auch über den Stator hinausragen können. Das hat den Vorteil, dass im oder am Gehäuse Hallsensoren angebracht werden können, die mit den Permanentmagneten in Wechselwirkung treten können, insbesondere, um eine Ansteuerung für die elektronische Kommutierung des langsam laufenden Elektromotors mittels der Steuerung vorzusehen.

Weiterhin weist der Trägerkörper in Bezug auf seinen Umlaufquerschnitt eine T-Form auf, was gleichbedeutend beschreiben werden kann mit einer H-Form im Halbschnitt, wodurch jedenfalls innenseitige Aussparungen gebildet sind, die radial umlaufend ausgebildet sind und in denen Lagerelemente zur Lagerung der Abtriebswelle im Gehäuse der Motoreinheit eingebracht werden. Wird die Motoreinheit montiert, so sind die freien Bereiche innerhalb des Trägerkörpers ausgefüllt mit den Lagerelementen, die in Lageraufnahmeabschnitten eingebracht sind, welche wiederum an den Gehäusehälften angeformt sein können. Durch die H-Form im Querschnitt des Trägerkörpers wird die Funktion zur Aufnahme der Permanentmagnete nicht negativ beeinflusst, jedoch können noch auf der Höhe der radialen Innenseiten des Rotationszylinders der Permanentmagnete die Lagerelemente für die Lagerung des Rotors in der Motoreinheit aufgenommen werden, wenigstens zum überwiegenden Teil.

Nach einer weiteren vorteilhaften Ausführungsform ist die Abtriebswelle mit einem Rotorumlaufabschnitt ausgebildet, auf dem der mit den Permanentmagneten bestückte Trägerkörper aufgebracht ist, wobei die Abtriebswelle insbesondere einen ersten Lagerabschnitt und einen zweiten Lagerabschnitt aufweist, in denen jeweils ein Lagerelement aufgenommen ist, wobei zwischen den Lagerabschnitten der Rotoraufnahmeabschnitt ausgebildet ist.

Mit weiterem Vorteil ist der Trägerkörper aus einem metallischen Sinterwerkstoff ausgebildet.

Alternativ kann vorgesehen sein, dass der Trägerkörper aus einem metallischen Gusswerkstoff, insbesondere Feingusswerkstoff, ausgebildet ist.

Weiterhin besteht vorteilhafterweise die Möglichkeit, dass auf den mit den Permanentmagneten bestückten Trägerkörper ein folienartiger Haltekörper aufgebracht ist. Der folienartige Haltekörper kann durch ein Isolierrohr aus Polyesterfolie ausgebildet sein, die auf den mit dem Permanentmagneten bestückten Trägerkörper aufgeschrumpft ist. Die Polyesterfolie ist dabei so dünn, dass diese noch zusätzlich in den Spalt zwischen der Außenseite der Permanentmagnete und der Innenseite der Zähne des Stators passt. Beispielsweise weist die Polyesterfolie eine Dicke von 0,1 mm auf. Durch die Verwendung einer solchen Polyesterfolie als Isolierrohr wird sichergestellt, dass auch bei einem ungewollten Lösen einer Klebeverbindung ein Permanentmagnet sich nicht vom Trägerkörper entfernt, und somit die Motoreinheit blockieren würde.

Alternativ ist der folienartige Haltekörper aus einem Wickelkörper aus einer Glasfaserfolie oder einem Glasfasergewebe ausgebildet.

Die Abtriebswelle kann sich aus einer Stirnseite des Gehäuses heraus erstrecken, sodass auf diesem Abschnitt der Abtriebswelle eine Riemenscheibe aufgebracht ist. Über die Riemenscheibe wird ein Zahnriemen gelegt, der direkt verbunden sein kann mit den Flügelelementen der Türanlage. Damit ist der Türantrieb mit der Motoreinheit als Direktantrieb ausgeführt, und es entfällt die Anordnung eines Getriebes.

Die Erfindung betrifft weiterhin eine Türanlage mit einem Türantrieb mit den vorstehend beschriebenen Merkmalen. Die Türanlage kann ein Verbindungselement zum Verbinden mit einem Flügelelement aufweisen. Zusätzlich oder alternativ kann die Türanlage wenigstens ein Flügelelement, mit dem der Türantrieb antreibend in Wirkverbindung steht, aufweisen.

Beispielsweise kann die Türanlage als eine Schiebetüranlage ausgebildet sein. Die Schiebetüranlage kann einen Riemen, insbesondere einen Zahnriemen, umfassen. Das Verbindungselement kann zumindest mittelbar mit dem Riemen verbunden sein. Das Verbindungselement kann als Läufer, insbesondere als Rollwagen, ausgebildet sein. Das Verbindungselement kann in einer Schiene, insbesondere in einer Schiene des Trägerprofils, laufen. Der Riemen kann zwischen Riemenscheiben der Türanlage gespannt sein. Eine der Riemenscheiben kann als die Riemenscheibe des erfindungsgemäßen Türantriebs ausgebildet sein.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine Gesamtansicht des Türantriebs mit einer erfindungsgemäßen Motoreinheit,
- Fig. 2: eine perspektivische Ansicht der Motoreinheit mit einer entnommenen oberen Gehäusehälfte,
- Fig. 3: einen Halbschnitt der Motoreinheit ohne eine obere Gehäusehälfte,
- Fig. 4: eine perspektivische Ansicht des Rotors der Motoreinheit,
- Fig. 5: eine Detailansicht eines Abschnittes des Rotors und
- Fig. 6: eine perspektivische Ansicht eines Permanentmagneten.

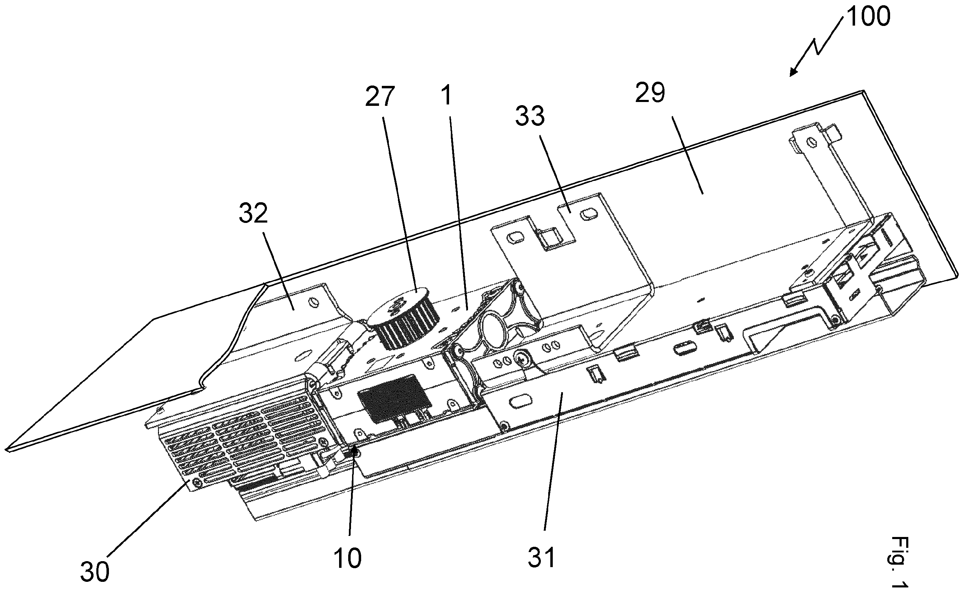

Fig. 1 zeigt eine Gesamtansicht des Türantriebs 100, wie dieser in Verbindung mit einer Türanlage in einem Gebäude installiert werden kann, womit auch die Installation auf Schiffen und in Flugzeugen umfasst sein soll, und ein Türantrieb 100 dieser Art dient beispielsweise als Antrieb für eine automatische Schiebetüranlage. Die Grundstruktur des Türantriebs 100 bildet ein Trägerprofil 29, welches zur einfacheren Ansicht verkürzt dargestellt ist, zudem ist der wesentliche obere Teil des L-förmigen Trägerprofils 29 aufgeschnitten gezeigt, um die weiteren vorliegend wesentlichen Komponenten des Türantriebs 100 sichtbar zu machen.

Als zentraler Bestandteil weist der Türantrieb 100 eine Motoreinheit 1 auf, die die Grundform eines Quaders besitzt, der das Gehäuse 10 der Motoreinheit 1 bildet. Um einen Abtrieb und damit eine Verbindung zu einem nicht näher dargestellten Flügelelement einer Türanlage zu ermöglichen, ist an der Motoreinheit 1 eine Riemenscheibe 27 angeordnet, über die ein Zahnriemen gelegt werden kann, mit dem schließlich die Verbindung zu dem oder den Flügelelementen, beispielsweise den Glasschiebeelementen, hergestellt wird.

Benachbart zur Motoreinheit 1 weist der Türantrieb 100 ein Netzteil 30 und eine Steuerung 31 auf, und das Netzteil 30 und die Steuerung 31 sind an sich gegenüberliegenden Seiten der Motoreinheit 1 angeordnet. Die Motoreinheit 1 ist mit einem ersten Flanschelement 32 am Trägerprofil 29 befestigt, wobei das erste Flanschelement 32 zugleich das Netzteil 30 haltend mit aufnimmt. Weiterhin ist die Motoreinheit 1 mit einem zweiten Flanschelement 33 mit dem Trägerprofil 29 verbunden, wobei das zweite Flanschelement 33 zugleich die Steuerung 31 aufnimmt. Alternativ ist auch die Ausführung eines einzigen Flansches möglich, um wenigstens die Motoreinheit 1, das Netzteil 30 und die Steuerung 31 aufzunehmen, ferner besteht die Möglichkeit, dass die Motoreinheit 1, das Netzteil 30 und/oder die Steuerung 31 jeweils zugeordnete separate Flanschelemente zur Anordnung im oder am Trägerprofil 29 aufweisen.

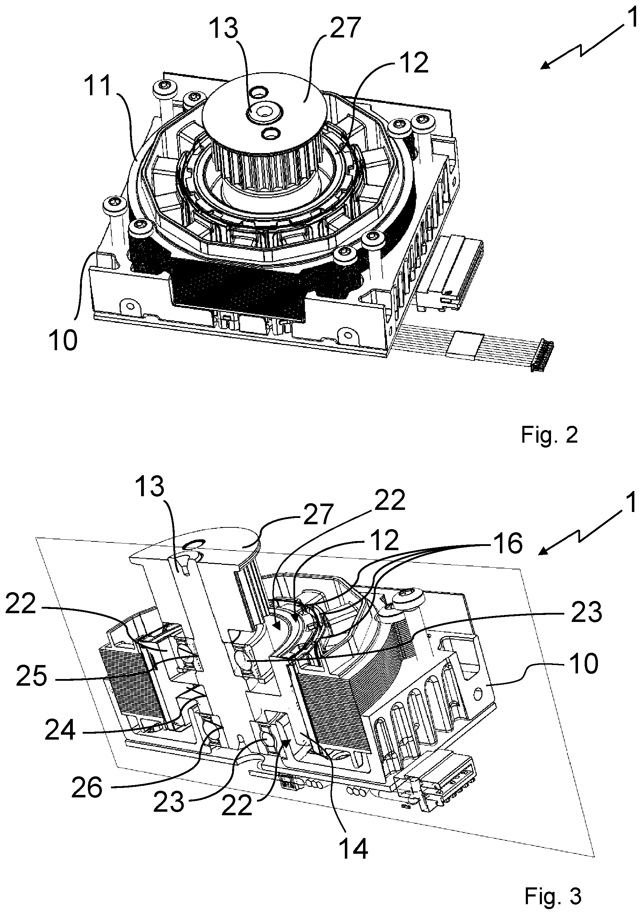

Fig. 2 zeigt eine perspektivische Ansicht der Motoreinheit 1 mit dem Gehäuse 10, wobei lediglich eine untere Gehäusehälfte dargestellt ist, und die obere Gehäusehälfte ist zur Darstellung weiterer Komponenten der Motoreinheit 1 entnommen. Am Gehäuse 10, insbesondere betreffend die untere Gehäusehälfte gemäß der Darstellung, ist innenseitig ein Stator 11 montiert, und innerhalb des Stators 11 ist ein Rotor 12 in einer Abtriebswelle 13 drehbar aufgenommen. Oberhalb des nicht dargestellten oberen Teils des Gehäuses ist eine Riemenscheibe 27 auf der Abtriebswelle 13 aufgebracht, sodass die Motoreinheit 1 als Direktantrieb ausgeführt ist, und es erstreckt sich lediglich ein Zahnriemen zwischen der Motoreinheit 1 und dem Flügelelementen der Türanlage, beispielsweise einer automatischen Schiebetür.

Fig. 3 zeigt in einer quergeschnittenen Ansicht die Motoreinheit 1 mit dem Rotor 12, der als wesentliche Bestandteile die Abtriebswelle 13 und einen Trägerkörper 14 aufweist, und außenseitig am Trägerkörper 14 sind in regelmäßigen Abständen Permanentmagnete 16 aufgebracht. Auf einem aus dem Gehäuse 10 hervorstehenden Teil ist auf der Abtriebswelle 13 die Riemenscheibe 27 aufgebracht.

Die Abtriebswelle 13 ist mit einem Rotoraufnahmeabschnitt 24 ausgebildet, auf dem der mit den Permanentmagneten 16 bestückte Trägerkörper 14 aufgebracht ist. Weiterhin weist die Abtriebswelle 13 einen ersten Lagerabschnitt 25 und einen zweiten Lagerabschnitt 26 auf, auf denen jeweils ein Lagerelement 23 aufgenommen ist. Der Rotoraufnahmeabschnitt 24 befindet sich dabei mit Bezug auf die Längsachse der Abtriebswelle 13 zwischen den Lagerabschnitten 25 und 26.

Der Trägerkörper 14 weist eine T-Form in Bezug auf seinen Umlaufquerschnitt auf, wobei die Form des Trägerkörpers 14 auch mit einer H-Form in Bezug auf seinen gesamten Querschnitt beschrieben werden kann. Dadurch werden innenseitige Aussparungen 22 gebildet, in denen die Lagerelemente 23 eingebracht sind.

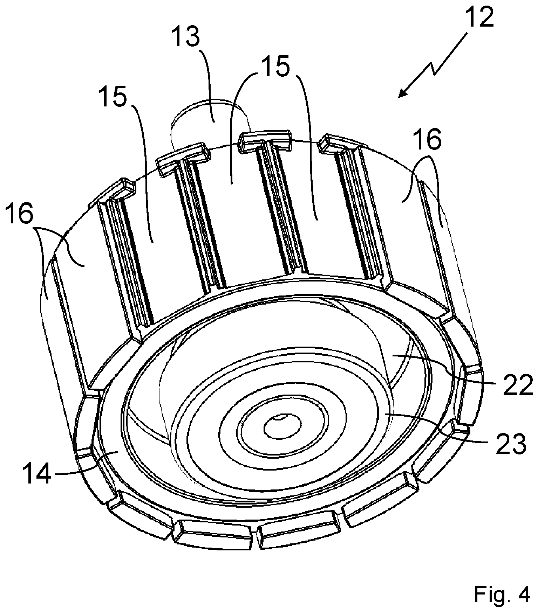

Fig. 4 zeigt eine perspektivische Ansicht des Rotors 12 mit der Abtriebswelle 13 und mit dem Trägerkörper 14, wobei eine untere Aussparung 22 zu sehen ist. Innerhalb der einzigen sichtbaren Aussparung 22 innerhalb des Trägerkörpers 14 ist beispielhaft ein Lagerelement 23 eingesetzt gezeigt, das zur drehbaren Aufnahme der Abtriebswelle 13 dient. Auf dem Außenumfang weist der Trägerkörper 14 Aufnahmefelder 15 auf, auf denen die Permanentmagnete 16 aufgebracht sind, wobei bei drei Aufnahmefeldern 15 beispielhaft kein Permanentmagnet 16 gezeigt ist.

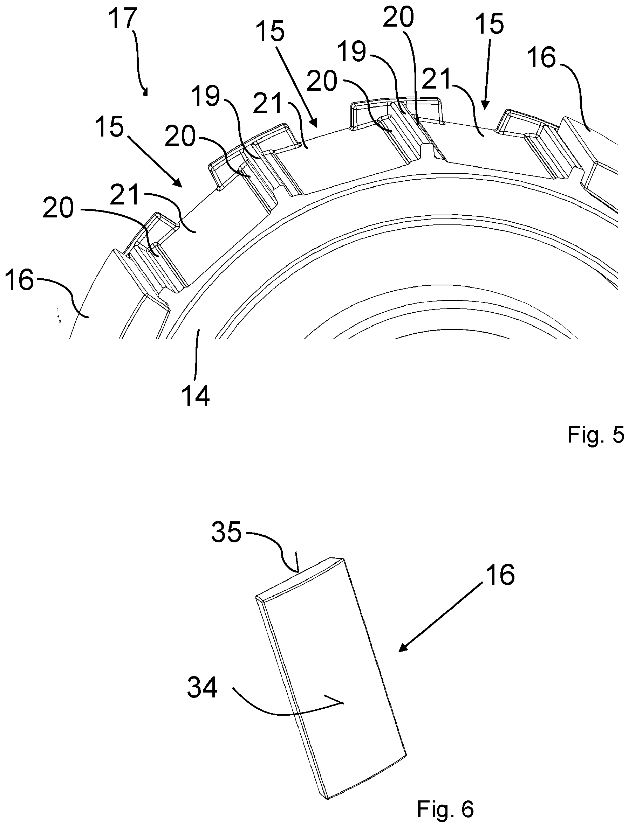

Fig. 5 zeigt eine vergrößerte Ansicht des Teils des Trägerkörpers 14 im Umfangsbereich der entnommenen Permanentmagnete 16 gemäß Figur 4, Die damit frei sichtbaren Aufnahmefelder 15 sind voneinander mit Trennstegen 19 getrennt, die einen Teil des Umfangsbereiches 17 des Rotors 12 bilden, und die Trennstege 19 erstrecken sich parallel zur Rotationsachse des Rotors, also in seiner Höhenrichtung. Seitlich an den Trennstegen 19 sind Auflagestreifen 20 ausgebildet, auf denen die Permanentmagnete 16 aufliegend und somit eine definierte Auflage erlangen.

Zwischen den Auflagestreifen 20 erstrecken sich Muldenbereiche 21, und sind die Permanentmagnete 16 auf den Aufnahmefeldern 15 angeordnet, liegen diese seitlich auf den Auflagestreifen 20 auf und werden durch ein Klebemittel gehalten, das sich im so gebildeten Spalt zwischen den Permanentmagneten 16 und dem Muldenbereich 21 der Aufnahmefelder 15 befindet. Über den Muldenbereich 21 mit einer leicht konkaven Wölbung wird ein definierter Klebespalt erreicht, sodass ein Acrylatkleber, insbesondere ein anaerober Kleber, eine entsprechend hohe Klebeleistung erreichen kann. Damit ist sichergestellt, dass sich die scheren Permanentmagnete 16 im Betrieb der Motoreinheit 1 nicht lösen, wobei die Motoreinheit 1 aufgrund der Direktantriebsverbindung zum Zahnriemen und damit zu einem Flügelelement einer Türanlage als Langsamläufer ausgebildet ist, sodass der Rotor keine hohen Drehzahlen erreicht, und damit die Fließkräfte der Permanentmagnete 16 im Betrieb der Motoreinheit 1 auch nicht zu hoch werden.

Fig. 6 zeigt schließlich eine Einzelansicht eines Permanentmagneten 16, und eine vordere Fläche 34 bildet eine gekrümmte Außenseite, die im aufgeklebten Zustand in Richtung zum Stator weist, und eine hintere Fläche 35 bildet vorzugsweise eine Planfläche, die in Richtung zum Aufnahmefeld 15 weist und mit dem Muldenbereich 21 eine Kavität für das Klebemittel bildet.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei anders gearteten Ausführungen Gebrauch macht.

### Bezugszeichenliste

- 100: Türantrieb
- 1: Motoreinheit
- 10: Gehäuse
- 11: Stator
- 12: Rotor
- 13: Abtriebswelle
- 14: Trägerkörper
- 15: Aufnahmefelder
- 16: Permanentmagnete
- 17: Umfangsbereich
- 18: Rotationsachse
- 19: Trennstege
- 20: Auflagestreifen
- 21: Muldenbereich
- 22: Aussparung
- 23: Lagerelement
- 24: Rotoraufnahmeabschnitt
- 25: erster Lagerabschnitt
- 26: zweiter Lagerabschnitt
- 27: Riemenscheibe
- 28: Stirnseite
- 29: Trägerprofil
- 30: Netzteil
- 31: Steuerung
- 32: erstes Flanschelement
- 33: zweites Flanschelement
- 34: vordere Fläche
- 35: hintere Fläche

## Patentansprüche

1. Türantrieb (100) zur Anordnung an oder in Verbindung mit einer Türanlage, mit dem zumindest ein Flügelelement der Türanlage bewegbar ist, aufweisend eine Motoreinheit (1) mit einem Gehäuse (10), in dem ein Stator (11) ruhend aufgenommen ist und wobei ein Rotor (12) drehbeweglich im Gehäuse (10) angeordnet ist, der eine Abtriebswelle (13) aufweist, wobei die Abtriebswelle (13) mit dem Flügelelement antreibend in Wirkverbindung bringbar ist, und wobei der Rotor (12) einen Trägerkörper (14) aufweist, an dem Aufnahmefelder (15) ausgebildet sind, auf denen Permanentmagnete (16) aufgeklebt sind, wobei ferner der Rotor (12) einen Umfangsbereich (17) aufweist, der mit den Aufnahmefeldern (15) eine polygonartige Gestalt bildet und wobei der Rotor (12) eine Rotationsachse (18) aufweist, wobei zwischen den Aufnahmefeldern (15) Trennstege (19) ausgebildet sind, die einen Teil des Umfangsbereiches (17) bilden und sich parallel zur Rotationsachse (18) erstrecken und wobei die Aufnahmefelder (15) zwischen den Trennstegen (19) eine parallel zur Rotationsachse (18) verlaufende längliche Erstreckung aufweisen,
**dadurch gekennzeichnet, dass** die Aufnahmefelder (15) über ihrer Längskante mit seitlichen an die Trennstege (19) angrenzenden Auflagestreifen (20) ausgebildet sind, wobei die Aufnahmefelder (15) zwischen den Auflagestreifen (20) einen Muldenbereich (21) aufweisen, sodass bei Anordnung der Permanentmagnete (16) auf den Aufnahmefeldern (15) ein definierter Klebespalt zur Aufnahme von Klebemittel ausgebildet wird.

2. Türantrieb (100) nach Anspruch 1, **dadurch gekennzeichnet, dass** die Permanentmagnete (16) auf der der Abtriebswelle (13) abgewandten Seite über den Trägerkörper (14) hinausragen.

3. Türantrieb (100) nach Anspruch 1 oder 2, **dadurch gekennzeichnet, dass** der Trägerkörper (14) in Bezug auf seinen Umlaufquerschnitt eine T-Form und/oder in Bezug auf seinen Halbschnitt eine H-Form aufweist, wodurch innenseitige Aussparungen (22) gebildet sind, in denen Lagerelemente (23) eingebracht sind.

4. Türantrieb (100) nach einem der vorgenannten Ansprüche, **dadurch gekennzeichnet, dass** die Abtriebswelle (13) mit einem Rotoraufnahmeabschnitt (24) ausgebildet ist, auf dem der mit den Permanentmagneten (16) bestückte Trägerkörper (14) aufgebracht ist und/oder wobei die Abtriebswelle (13) einen ersten Lagerabschnitt (25) und einen zweiten Lagerabschnitt (26) aufweist, auf denen jeweils ein Lagerelement (23) aufgenommen ist, wobei zwischen den Lagerabschnitten (25, 26) der Rotoraufnahmeabschnitt (24) ausgebildet ist.

5. Türantrieb (100) nach einem der vorgenannten Ansprüche, **dadurch gekennzeichnet, dass** der Trägerkörper (14) aus einem metallischen Sinterwerkstoff oder Gusswerkstoff ausgebildet ist.

6. Türantrieb (100) nach einem der vorgenannten Ansprüche, **dadurch gekennzeichnet, dass** auf dem mit den Permanentmagneten (16) bestückten Trägerkörper (14) ein folienartiger Haltekörper aufgebracht ist.

7. Türantrieb (100) nach Anspruch 6, **dadurch gekennzeichnet, dass** der folienartige Haltekörper ein Isolierrohr aus Polyesterfolie aufweist und auf den mit den Permanentmagneten (16) bestückten Trägerkörper (14) aufschrumpfbar ist.

8. Türantrieb (100) nach Anspruch 6 oder 7, **dadurch gekennzeichnet, dass** der folienartige Haltekörper aus einem Wickelkörper aus einer Glasfaserfolie oder einem Glasfasergewebe gebildet ist.

9. Türantrieb (100) nach einem der vorgenannten Ansprüche, **dadurch gekennzeichnet, dass** sich die Abtriebswelle (13) abschnittsweise aus einer Stirnseite (28) des Gehäuses (10 heraus erstreckt, sodass auf diesem Abschnitt der Abtriebswelle (1) eine Riemenscheibe (27) aufgebracht ist.

10. Türantrieb (100) nach einem der vorgenannten Ansprüche, **dadurch gekennzeichnet, dass** der Klebstoff zum Aufkleben der Permanentmagnete (16) auf den Trägerkörper (14) des Rotors (12) einen Acrylatkleber umfasst und/oder einen anaeroben Klebstoff bildet.

11. Türanlage mit einem Türantrieb (100) gemäß einem der vorgenannten Ansprüche, aufweisend wenigstens ein Verbindungselement zum Verbinden mit einem Flügelelement und/oder wenigstens ein Flügelelement, mit dem der Türantrieb (100) antreibend in Wirkverbindung steht.

## Claims

1. A door drive (100) for arrangement on or in connection with a door system, by means of which at least one leaf element of the door system is movable, including a motor unit (1) with a housing (10), in which a stator (11) is stationarily received, and wherein a rotor (12) is arranged so as to be rotationally-movable in the housing (10) and includes an output shaft (13), wherein the output shaft (13) can be brought into operative connection in a driving manner with the leaf element, and wherein the rotor (12) includes a support body (14), on which receiving fields (15) are formed, on which permanent magnets (16) are adhered, wherein the rotor (12) also has a circumferential area (17), which forms a polygon-like shape with the receiving fields (15), and wherein the rotor (12) has an axis of rotation (18), wherein separating webs (19) are formed between the receiving fields (15), which form a part of the circumferential area (17) and extend parallel to the axis of rotation (18), and wherein the receiving fields (15) have a longitudinal extension running parallel to the axis of rotation (18) between the separating webs (19),
**characterized in that** the receiving fields (15) over their longitudinal edge are formed with overlay strips (20) laterally adjoining the separating webs (19), wherein the receiving fields (15) have a depressed area (21) between the overlay strips (20) such that, when the permanent magnets (16) are arranged on the receiving fields (15), a defined adhesive gap is formed for receiving adhesive.

2. The door drive (100) according to claim 1, **characterized in that**, on the side facing away from the output shaft (13), the permanent magnets (16) protrude beyond the support body (14).

3. The door drive (100) according to claim 1 or 2, **characterized in that**, with regard to its circumferential cross-section, the support body (14) has a T-shape and/or, with regard to its half-section, has an H-shape, whereby inner recesses (22) are formed, into which bearing elements (23) are introduced.

4. The door drive (100) according to one of the preceding claims, **characterized in that** the output shaft (13) is formed with a rotor receiving section (24), on which the support body (14) fitted with the permanent magnets (16) is attached and/or wherein the output shaft (13) has a first bearing section (25) and a second bearing section (26), on each of which one bearing element (23) is received, wherein the rotor receiving section (24) is formed between the bearing sections (25, 26).

5. The door drive (100) according to one of the preceding claims, **characterized in that** the support body (14) is formed from a metallic sintered material or a casting material.

6. The door drive (100) according to one of the preceding claims, **characterized in that** a film-like retaining body is attached on the support body (14) fitted with the permanent magnets (16).

7. The door drive (100) according to claim 6, **characterized in that** the film-like retaining body includes an insulating tube made of polyester film and can be shrink-fitted onto the support body (14) fitted with the permanent magnets (16).

8. The door drive (100) according to claim 6 or 7, **characterized in that** the film-like retaining body is formed from a winding body of a fibre glass film or a fibre glass fabric.

9. The door drive (100) according to one of the preceding claims, **characterized in that** the output shaft (13) extends in sections from an end face (28) of the housing (10) such that a belt pulley (27) is attached on said section of the output shaft (1).

10. The door drive (100) according to one of the preceding claims, **characterized in that** the adhesive for adhering the permanent magnets (16) onto the support body (14) of the rotor (12) comprises acrylate adhesive and/or an anaerobic adhesive.

11. A door system with a door drive (100) according to one of the preceding claims, including at least one connecting element for connecting to a leaf element and/or at least one leaf element, with which the door drive (100) is operatively connected in a driving manner.

## Revendications

1. Entraînement de porte (100) destiné à être agencé sur ou en relation avec un système de porte, avec lequel au moins un élément battant du système de porte peut être déplacé, présentant une unité moteur (1) comportant un boîtier (10) dans lequel un stator (11) est logé au repos et dans lequel un rotor (12) est agencé de manière rotative dans le boîtier (10), qui présente un arbre de sortie (13), dans lequel l'arbre de sortie (13) peut être placé en liaison fonctionnelle d'entraînement avec l'élément battant, et dans lequel le rotor (12) présente un corps porteur (14) sur lequel sont formés des champs de réception (15) sur lesquels sont collés des aimants permanents (16), dans lequel en outre le rotor (12) présente un zone périphérique (17) qui forme avec les champs de réception (15) une forme polygonale et dans lequel le rotor (12) présente un axe de rotation (18), dans lequel des séparateurs (19) sont formés entre les champs de réception (15), qui font partie de la zone périphérique (17) et s'étendent parallèlement à l'axe de rotation (18), et dans lequel les champs de réception (15) présentent entre les séparateurs (19) une extension longitudinale s'étendant parallèlement à l'axe de rotation (18),
**caractérisé, en ce que** les champs de réception (15) sont formés sur leur bord longitudinal avec des bandes d'appui (20) latéralement adjacentes aux séparateurs (19), dans lequel les champs de réception (15) présentent une zone de goulotte (21) entre les bandes d'appui (20), de telle sorte que lors de l'agencement des aimants permanents (16) sur les champs de réception (15), un espace d'adhésif défini est formé pour recevoir de l'adhésif.

2. Entraînement de porte (100) selon la revendication 1, **caractérisé, en ce que** les aimants permanents (16) dépassent du corps porteur (14) du côté opposé à l'arbre de sortie (13).

3. Entraînement de porte (100) selon la revendication 1 ou 2, **caractérisé, en ce que** le corps porteur (14) présente une forme en T par rapport à sa section transversale périphérique et/ou une forme en H par rapport à sa demi-section, grâce à quoi sont formés côté intérieur des évidements (22) dans lesquels des éléments de palier (23) sont insérés.

4. Entraînement de porte (100) selon l'une des revendications précédentes, **caractérisé, en ce que** l'arbre de sortie (13) est conçu avec une section de logement de rotor (24) sur laquelle est appliqué le corps porteur (14) équipé des aimants permanents (16) et/ou dans lequel l'arbre de sortie (13) présente une première section de palier (25) et une seconde section de palier (26), sur chacune desquelles un élément de palier (23) est reçu, dans lequel la section de réception de rotor (24) est formée entre les sections de palier (25, 26).

5. Entraînement de porte (100) selon l'une des revendications précédentes, **caractérisé, en ce que** le corps porteur (14) est conçu en un matériau métallique fritté ou un matériau moulé.

6. Entraînement de porte (100) selon l'une des revendications précédentes, **caractérisé, en ce que** sur le corps porteur (14) équipé des aimants permanents (16), un corps de maintien en forme de film est appliqué.

7. Entraînement de porte (100) selon la revendication 6, **caractérisé, en ce que** le corps de maintien en forme de film présente un tube isolant en film polyester et peut être rétréci sur le corps porteur (14) équipé des aimants permanents (16).

8. Entraînement de porte (100) selon la revendication 6 ou 7, **caractérisé, en ce que** le corps de support en forme de film est formé d'un corps d'enroulement constitué d'un film de fibres de verre ou d'un tissu de fibres de verre.

9. Entraînement de porte (100) selon l'une des revendications précédentes, **caractérisé, en ce que** l'arbre de sortie (13) s'étend par sections hors d'une face frontale (28) du boîtier (10), de sorte qu'une poulie à courroie (27) est appliquée sur cette section de l'arbre de sortie (1).

10. Entraînement de porte (100) selon l'une des revendications précédentes, **caractérisé, en ce que** l'adhésif pour coller les aimants permanents (16) sur le corps porteur (14) du rotor (12) comprend une colle acrylate et/ou forme une colle anaérobie.

11. Système de porte comportant un entraînement de porte (100) selon l'une des revendications précédentes, présentant au moins un élément de liaison destiné à être relié à un élément battant et/ou au moins un élément battant avec lequel l'entraînement de porte (100) est en liaison fonctionnelle d'entraînement.
